# EUROPEAN PATENT SPECIFICATION

(11) **EP 2 940 596 B1**
(45) Date of publication and mention of the grant of the patent: **01.11.2017**
(21) Application number: 13869274.4
(22) Date of filing: 18.09.2013
(51) Int. Cl.: G06F 11/14, G06F 11/34

(54) **DATA ACQUISITION METHOD AND DEVICE**
DATENERFASSUNGSVERFAHREN UND -VORRICHTUNG
PROCÉDÉ ET DISPOSITIF POUR L'ACQUISITION DE DONNÉES

(30) Priority: 28.12.2012 CN 201210586829
(43) Date of publication of application: 04.11.2015
(73) Proprietor: ZTE Corporation, Shenzhen, Guangdong 518057 (CN)
(72) Inventor: FANG, Kai, Shenzhen Guangdong 518057 (CN)
(74) Representative: Modiano, Micaela Nadia
(86) International application number: PCT/CN2013/083822
(87) International publication number: WO 2014/101487

(56) References cited:
- WO-A2-2006/099575
- CN-A- 1 756 190
- CN-A- 101 673 457
- CN-A- 103 095 492
- US-A1- 2010 083 263
- US-B1- 6 804 627
- US-B1- 7 328 192
- US-B1- 7 945 813

## Description

### Technical Field

The present invention relates to the field of data communication, and particularly to a method and device for acquiring data.

### Background

Performance management, which is an important part of a telecommunications network management system, is based on performance data. A user may analyze performance data statistically to learn an overall operating condition of a network, thus providing a basis for management and decision of an operator. A main acquisition task is generated periodically to acquire performance data of a system according to an existing method for acquiring performance data. However, reporting of the performance data is usually delayed due to a network reason or a failure of a network element device. When the reporting of the performance data is delayed, a data acquisition task of performance management may fail to acquire data of a current time granularity, thus resulting incompleteness of the performance data on the time granularity to affect statistic analysis for the performance data.

Document US 7 945 813 B1 is considered to constitute the closest prior art to the present invention since, using the terminology of claim 1, can be interpreted as disclosing:

A method for acquiring data comprising: establishing a data acquisition task; generating a main acquisition task of data and adding the main acquisition task into the data acquisition task queue; acquiring the main acquisition task from the data acquisition task queue and executing the main acquisition task, and after the execution of the main acquisition task fails, generating a supplementary acquisition task corresponding to the main acquisition task and adding the supplementary acquisition task into the data acquisition task queue; acquiring and executing the supplementary acquisition task from the data acquisition task queue.

### Summary

A major technical problem to be solved by embodiments of the present invention is to provide a method for acquiring the data and device capable of ensuring the integrity of data on a time granularity.

An embodiment of the present invention provides a method for acquiring the data to solve the technical problem, including the following steps.

A data acquisition task queue is established.

A main acquisition task of data is generated and added into the data acquisition task queue.

The main acquisition task is acquired from the data acquisition task queue and executed, and after the execution of the main acquisition task fails, a supplementary acquisition task corresponding to the main acquisition task is generated and added into the data acquisition task queue.

The supplementary acquisition task is acquired from the data acquisition task queue and executed.

Preferably, after the main acquisition task fails, generating the supplementary acquisition task corresponding to the main acquisition task and adding the same into the data acquisition task queue includes that
after a failure notification of the main acquisition task is received, the supplementary acquisition task is generated automatically after a time interval and added into the data acquisition task queue;
or after a failure notification of the main acquisition task is received, the supplementary acquisition task is generated automatically and immediately and added into the data acquisition task queue.

Preferably, the method further includes that
when the execution of the supplementary acquisition task fails, whether a frequency of executing the supplementary acquisition task is smaller than a preset frequency is determined; if yes, the supplementary acquisition task, which fails to be executed, is regenerated and added into the data acquisition task queue; otherwise, it is determined that the execution of the automatically-generated supplementary acquisition task fails.

Preferably, generating the main acquisition task of the data and adding the same into the data acquisition task queue includes that
the main acquisition task of the data is generated at a time interval and the generated main acquisition task is added into the data acquisition task queue, wherein a value of the time interval at which a main acquisition task of data is generated is different from a value of a time interval at which a supplementary acquisition task is generated.

Preferably, after it is determined that the execution of the automatically-generated supplementary acquisition task fails, the method further includes that
a manual supplementary acquisition instruction is received;
a manual supplementary acquisition task is generated according to the manual supplementary acquisition instruction and added into the data acquisition task queue;
the manual supplementary acquisition task is acquired from the data acquisition task queue and executed.

Preferably, establishing the data acquisition task queue includes that
the data acquisition task queue is established and priorities of acquisition tasks are set in the acquisition task queue, wherein a descending order of the priorities of the acquisition tasks is: a main acquisition task, an automatically-generated supplementary acquisition task and a manual supplementary acquisition task;
or
establishing the data acquisition task queue includes that the data acquisition task queue is established and acquisition tasks in the data acquisition task queue are arranged according to a time sequence of generating the acquisition tasks.

Preferably, when the main acquisition task fails, generating the supplementary acquisition task corresponding to the main acquisition task and adding the same into the data acquisition task queue includes that
after a failure notification of the main acquisition task is received, a manual supplementary acquisition instruction is received;
a manual supplementary acquisition task is generated according to the manual supplementary acquisition instruction and added into the data acquisition task queue.

Similarly, an embodiment of the present invention further provides a device for acquiring the data to solve the technical problem, including: a data acquisition main control component, a main acquisition task generating component, a supplementary acquisition task generating component and an acquisition task executing component;
the data acquisition main control component is configured to establish a data acquisition task queue;
the main acquisition task generating component is configured to generate a main acquisition task of data and add the main acquisition task into the data acquisition task queue;
the acquisition task executing component is configured to acquire an acquisition task from the data acquisition task queue and execute the same;
the supplementary acquisition task generating component is configured to generate, after the execution of the main acquisition task fails, a supplementary acquisition task corresponding to the main acquisition task and add the same into the data acquisition task queue.

Preferably, the supplementary acquisition task generating component includes an automatic supplementary acquisition task generating sub-component; the automatic supplementary acquisition task generating sub-component is configured to generate, after receiving a failure notification of the main acquisition task, the supplementary acquisition task automatically after a time interval, and add the same into the data acquisition task queue;
or is configured to generate, after receiving a failure notification of the main acquisition task, the supplementary acquisition task automatically and immediately and add the same into the data acquisition task queue.

Preferably, the device for acquiring the data further includes: an execution frequency determining component; the execution frequency determining component is configured to determine, when the execution of the supplementary acquisition task fails, whether a frequency of executing the supplementary acquisition task is smaller than a preset frequency; if yes, notify the automatic supplementary acquisition task generating sub-component to regenerate the supplementary acquisition task which fails to be executed and add the same into the data acquisition task queue; otherwise, determine that the execution of the automatically-generated supplementary acquisition task fails.

Preferably, the main acquisition task generating component is configured to generate a main acquisition task of data at a time interval and add the main acquisition task into the data acquisition task queue, wherein a value of the time interval at which a main acquisition task of data is generated is different from a value of a time interval at which a supplementary acquisition task is generated.

Preferably, the device for acquiring the data further includes: an instruction receiving component and a manual supplementary acquisition task generating component;
the instruction receiving component is configured to receive, after it is determined that the execution of the automatically-generated supplementary acquisition task fails, a manual supplementary acquisition instruction;
the manual supplementary acquisition task generating component is configured to generate, according to the manual supplementary acquisition instruction, a manual supplementary acquisition task and add the same into the data acquisition task queue;
the acquisition task executing component is further configured to acquire the manual supplementary acquisition task from the data acquisition task queue and execute the same.

Preferably, the supplementary acquisition task generating component includes: an instruction receiving sub-component and a manual supplementary acquisition task generating sub-component;
the instruction receiving sub-component is configured to receive, after receiving a failure notification of the main acquisition task, a manual supplementary acquisition instruction inputted by a user;
the manual supplementary acquisition task generating sub-component is configured to generate, according to the manual supplementary acquisition instruction, a manual supplementary acquisition task and add the same into the data acquisition task queue.

The embodiments of the present invention have the following beneficial effect.

A method for acquiring the data and device according to the embodiments of the present invention can ensure the integrity of performance data on a time granularity, wherein the method for acquiring the data includes that a data acquisition task queue is established; a main acquisition task of data is generated and the main acquisition task is added into the data acquisition task queue; the main acquisition task is acquired from the data acquisition task queue and executed; and after the execution of the main acquisition task fails, a supplementary acquisition task corresponding to the main acquisition task is generated and added into the data acquisition task queue; and the supplementary acquisition task is acquired from the data acquisition task queue and executed. After the main acquisition task fails, the method generates the corresponding supplementary acquisition task to continue to acquire data that has not been acquired, thereby ensuring the integrity of the data. If performance data is acquired at the moment, the integrity of the performance data is ensured. In addition, a performance method for acquiring the data according to an embodiment of the present invention separates a task executing process from a task generating process through establishing an acquisition task queue, thus avoiding the problem of delayed execution of an acquisition task.

According the present invention, there is provided a method for acquiring performance data of a telecommunication network according to claim 1, and a telecommunication network management system for acquiring performance data of a telecommunication network according to claim 8.

### Brief Description of the Drawings

Fig. 1 is a flowchart of a method for acquiring performance data according to the first embodiment of the present invention;
Fig. 2 is another flowchart of a method for acquiring performance data according to the first embodiment of the present invention;
Fig. 3 is the first structural diagram of a device for acquiring performance data according to the second embodiment of the present invention;
Fig. 4 is the second structural diagram of a device for acquiring performance data according to the second embodiment of the present invention;
Fig. 5 is the third structural diagram of a device for acquiring performance data according to the second embodiment of the present invention;
Fig. 6 is the fourth structural diagram of a device for acquiring performance data according to the second embodiment of the present invention;
Fig. 7 is the fifth structural diagram of a device for acquiring performance data according to the second embodiment of the present invention;
Fig. 8 is a diagram of a working flow of a data acquisition numerical control thread according to the second embodiment of the present invention;
Fig. 9 is a diagram of a processing flow of a main acquisition timer of data according to the second embodiment of the present invention; and
Fig. 10 is a diagram of a processing flow of an automatic supplementary acquisition timer according to the second embodiment of the present invention.

### Detailed Description of the Embodiments

The present invention will be further expounded through specific embodiments and in combination with the accompanying drawings.

A method for acquiring data in an embodiment of the present invention is applicable to acquisition of data in various systems, and will be described below by taking acquisition of performance data in a telecommunications network management software system as an example.

### Embodiment 1

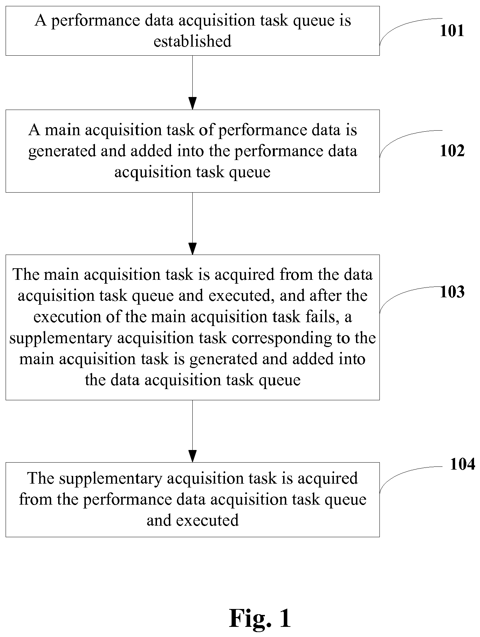

As shown in Fig. 1, a method for acquiring performance data in the present embodiment includes the following steps.
Step 101: A performance data acquisition task queue is established.
Step 102: A main acquisition task of performance data is generated and added into the performance data acquisition task queue.
Step 103: The main acquisition task is acquired from the data acquisition task queue and executed, and after the execution of the main acquisition task fails, a supplementary acquisition task corresponding to the main acquisition task is generated and added into the data acquisition task queue.
Step 104: The supplementary acquisition task is acquired from the performance data acquisition task queue and executed.

In the Step 103, after the main acquisition task fails, generating the supplementary acquisition task corresponding to the main acquisition task and adding the same into the data acquisition task queue includes that
after a failure notification of the main acquisition task is received, the supplementary acquisition task is generated automatically after a time interval and added into the data acquisition task queue;
or after a failure notification of the main acquisition task is received, the supplementary acquisition task is generated automatically and immediately and added into the data acquisition task queue.

There may be many methods for generating the supplementary acquisition task corresponding to the main acquisition task in the present embodiment. Specific settings of the methods are related to acquisition requirements, and several setting methods will be listed as follows.
1. After receiving a failure notification of the main acquisition task, the supplementary acquisition task corresponding to the main acquisition task is generated automatically and immediately.
2. A delay starts after the execution of the main acquisition task fails. Timing is started when the delay reaches a preset time threshold, and the corresponding supplementary acquisition task is generated automatically when the timing reaches a preset time threshold. For example, timing is started only after a delay of 5 seconds after the execution of the main acquisition task fails and the corresponding supplementary acquisition task is generated automatically if the timing reaches 10 seconds.
3. Timing is started when the execution of the main acquisition task fails, and the corresponding supplementary acquisition task is generated automatically at a preset moment when the supplementary acquisition task is generated. For example, the supplementary acquisition task is generated automatically at 5 seconds after the execution of the main acquisition task fails. During practical acquisition of the performance data of the telecommunications network management software system, a supplementary acquisition task is generally generated at 61 minutes after execution of a main acquisition task fails.

The supplementary acquisition task corresponding to the main acquisition task may be generated automatically at a time internal after the execution of the main acquisition task fails according to the first and second setting methods.

Methods for generating the supplementary acquisition task in the method for acquiring the performance data according to the present embodiment are not limited only to several setting methods listed above. A method for generating the supplementary acquisition task may be specifically set according to an acquisition requirement and a time when the main acquisition task is generated.

All supplementary acquisition tasks are generated automatically in the method for acquiring the performance data in the embodiment of the present invention. Generating the supplementary acquisition task corresponding to the main acquisition task in the present embodiment may be also generating a corresponding manual supplementary acquisition task by inputting an acquisition instruction manually. Therefore, when the main acquisition task fails in the Step 103, generating the supplementary acquisition task corresponding to the main acquisition task and adding the same into the data acquisition task queue includes that
after the failure notification of the main acquisition task is received, a manual supplementary acquisition instruction is received;
a manual supplementary acquisition task is generated according to the manual supplementary acquisition instruction and added into the data acquisition task queue.

In a method for acquiring the performance data provided by the present embodiment, working personnel may be allowed to input a supplementary acquisition instruction on a system interface when execution of a main acquisition task fails, and the system will generate a manual supplementary acquisition task corresponding to the main acquisition task to acquire performance data not acquired by the main acquisition task.

Similarly, a method for generating a main acquisition task in the present embodiment may be also set according to time. The method for generating a main acquisition task in the method for acquiring the performance data in the present embodiment may include that a main acquisition task of data is generated at a time interval and a generated main acquisition task is added into the data acquisition task queue, wherein different time intervals may be set to generate main acquisition tasks continuously or the same time interval may be also set to generate main acquisition tasks periodically. For example, in the case that the same time interval is set to generate a main acquisition task periodically, a main acquisition task may be generated every 1 hour. In the case that different time intervals are set to generate main acquisition tasks continuously, a first main acquisition task may be generated at 8 o' clock, a second main acquisition task is generated at 11 o' clock, a third main acquisition task is generated at 15 o' clock and so on. Of course, methods for generating a main acquisition task in the present embodiment are not limited only to several methods listed above and a method for generating a main acquisition task may be set on software or hardware according to an acquisition requirement of performance data.

A time when a supplementary acquisition task is generated and a time when a main acquisition task is generated in the present embodiment may take the same reference time as a standard, or may also not take the same reference time as a standard. For example, timing is started after it is found that execution of a main acquisition task fails, and a supplementary acquisition task is generated automatically when the timing reaches a preset moment when the supplementary acquisition task is generated. A starting point of the timing may be also set. A starting point that the timing may be performed may refer to that the timing is started immediately from the moment when the execution of the main acquisition task fails. The supplementary acquisition task is generated automatically when the preset moment is reached, or the timing may be also started at 5 seconds after the execution of the main acquisition task fails, and the supplementary acquisition task is generated automatically when the preset moment is reached.

If a time when a main acquisition task is generated and a time when a supplementary acquisition task is generated take the same reference time as a standard, a moment when a supplementary acquisition task is generated is fixed. A period of generating a supplementary acquisition task automatically may be set as 6 seconds if a generating period of a main acquisition task is 5 seconds. If it is determined that execution of the main acquisition task fails 6 seconds ago, a corresponding supplementary acquisition task is generated automatically at the sixth second.

To ensure that performance data not acquired at a previous moment can be acquired, the method for acquiring the data provided in the present embodiment further includes that
when the execution of the supplementary acquisition task fails, whether a frequency of executing the supplementary acquisition task is smaller than a preset frequency is determined; if yes, the supplementary acquisition task, which fails to be executed, is regenerated and added into the data acquisition task queue; otherwise, it is determined that the execution of the automatically-generated supplementary acquisition task fails.
regenerating the supplementary acquisition task which fails to be executed may include that the supplementary acquisition task is generated automatically again according to the foregoing methods for generating the supplementary acquisition task automatically. For example, when the execution of the supplementary acquisition task fails, the supplementary acquisition task may be generated again automatically and immediately when it is determined that the frequency of executing the supplementary acquisition task is smaller than the preset frequency, or timing is started and the supplementary acquisition task is generated automatically when the timing reaches a preset time, or the timing is started after a delay of a period of time, and the supplementary acquisition task is generated automatically when the timing reaches the preset time.

A corresponding supplementary acquisition task will be generated automatically after execution of a main acquisition task fails so as to continue to complete the failed acquisition task in the method for acquiring the performance data of the present embodiment, thus ensuring the integrity of acquired performance data on time. Provided that a generating period of a main acquisition task is 1 hour, the telecommunications network management software system generates a main acquisition task every 1 hour and adds the same into the performance data acquisition task queue. A main acquisition task needs to be extracted from the acquisition task queue during task execution. When execution of a main acquisition task at a time point fails, the system will generate a supplementary acquisition task automatically according to the following two methods.
1. In the case that generation of a supplementary acquisition task and generation of a main acquisition task take the same reference time as a standard, when the main acquisition task of the time point is executed, a supplementary acquisition task corresponding to the main acquisition task of the time point will be generated at a present time point when the supplementary acquisition task is generated. After execution of the supplementary acquisition task fails, a supplementary acquisition task corresponding to the main acquisition task of the time point may be generated again automatically to ensure that performance data of the time can be acquired. For example, a frequency of generating a supplementary acquisition task is preset to be 3 times, and a time when a supplementary acquisition task is generated is preset to be 1 minute after a sharp time, e.g. 8:01, 9:01, 10:01...... and a main acquisition task is generated every 1 hour. When execution of a main acquisition task generated at 7 o' clock fails, the system will generate a supplementary acquisition task corresponding to the main acquisition task of 7 o' clock automatically at 8:01 for a first time. If execution of the supplementary acquisition task corresponding to the main acquisition task of 7 o' clock fails, since the frequency of generating a supplementary acquisition task is smaller than 3 times, a supplementary acquisition task corresponding to the main acquisition task of 7 o' clock will be generated at 9:01 automatically for a second time. If execution of the supplementary acquisition task fails again, a supplementary acquisition task corresponding to the main acquisition task of 7 o' clock will be generated at 10:01 for the last time. If execution of the supplementary acquisition task still fails, it is determined that the acquisition fails. In the meanwhile, in order to ensure that supplementary acquisition tasks generated at the same time point will not have time conflicts, different time when a supplementary acquisition task is generated may be set for each main acquisition task. For example, a supplementary acquisition task corresponding to the main acquisition task of 7 o' clock may be set to be generated 1 minute after each sharp time, a supplementary acquisition task corresponding to a main acquisition task of 8 o' clock may be set to be generated at 2 minutes after each sharp time, and a time when a supplementary acquisition task corresponding to other main acquisition tasks is generated may be set in a similar fashion.
2. In the case that generation of a supplementary acquisition task and generation of a main acquisition task do not take the same reference time as a standard, a supplementary acquisition task corresponding to the main acquisition task of the time point may be generated automatically after a time interval (at an interval of 61 minutes) from a time point when execution fails, so as to continue to complete acquisition of performance data. For example, when execution of a main acquisition task generated at 8 o' clock fails, a time point (e.g. 8:02) when the execution fails is used as a starting point. Timing is started from the starting point, and a supplementary acquisition task corresponding to the main acquisition task of 8 o' clock is generated automatically when the timing reaches 61 minutes. In order to ensure that the system can acquired performance data that needs to be generated, it may be set that a supplementary acquisition task corresponding to the main acquisition task of the time point is generated automatically for many times. Provided that the supplementary acquisition task is generated for three times, after execution of the supplementary acquisition task generated automatically for the first time and corresponding to the main acquisition task of 8 o' clock fails, the timing is started from the moment when the execution of the supplementary acquisition task fails, and the supplementary acquisition task corresponding to the main acquisition task of 8 o' clock is generated for a second time when the timing reaches 61 minutes. If execution the supplementary acquisition task generated for the second time and corresponding to the main acquisition task of 8 o' clock fails, timing is started from a moment when the execution of the supplementary acquisition task generated for the second time fails, and the supplementary acquisition task corresponding to the main acquisition task of 8 o' clock is generated for a third time when the timing reaches 61 minutes. If execution of the supplementary acquisition task generated for the third time still fails, it is determined that the acquisition fails. If a frequency of generating the supplementary acquisition task automatically has been preset, the frequency of generating the supplementary acquisition task automatically may be limited when the supplementary acquisition task of the time point is generated automatically for a first time. Performance data that requires supplementary acquisition, time points and the generating frequency are recorded by the supplementary acquisition task of the moment. Provided that the generating frequency is 3 times, the system will execute the supplementary acquisition task of the moment until the execution succeeds or until completing execution of the supplementary acquisition task generated for a preset frequency.

In the Step 103 of the method for acquiring the performance data provided by the present embodiment, when the main acquisition task fails, generating the supplementary acquisition task corresponding to the main acquisition task and adding the same into the data acquisition task queue includes that
after a failure notification of the main acquisition task is received, a manual supplementary acquisition instruction inputted by a user is received;
a manual supplementary acquisition task is generated according to the manual supplementary acquisition instruction and added into the data acquisition task queue;
when a main acquisition task fails, working personnel may be allowed to input a corresponding manual supplementary acquisition instruction on an input interface so as to ensure that performance data that are not acquired previously can be acquired.

In the Step 102, the process of generating the main acquisition task of the performance data includes that
whether there is a main acquisition task that needs to be generated exists in the main acquisition task of the performance data is determined; if yes, the main acquisition task of the performance data is not generated; otherwise, the main acquisition task of the performance data is generated.

The process of generating the corresponding supplementary acquisition task includes that:
whether a supplementary acquisition task that needs to be generated exists in the data acquisition task queue of the performance data; if yes, the supplementary acquisition task is not generated; otherwise, the supplementary acquisition task corresponding to the main acquisition task is generated automatically. The supplementary acquisition task records performance data that requires supplementary acquisition and time points.

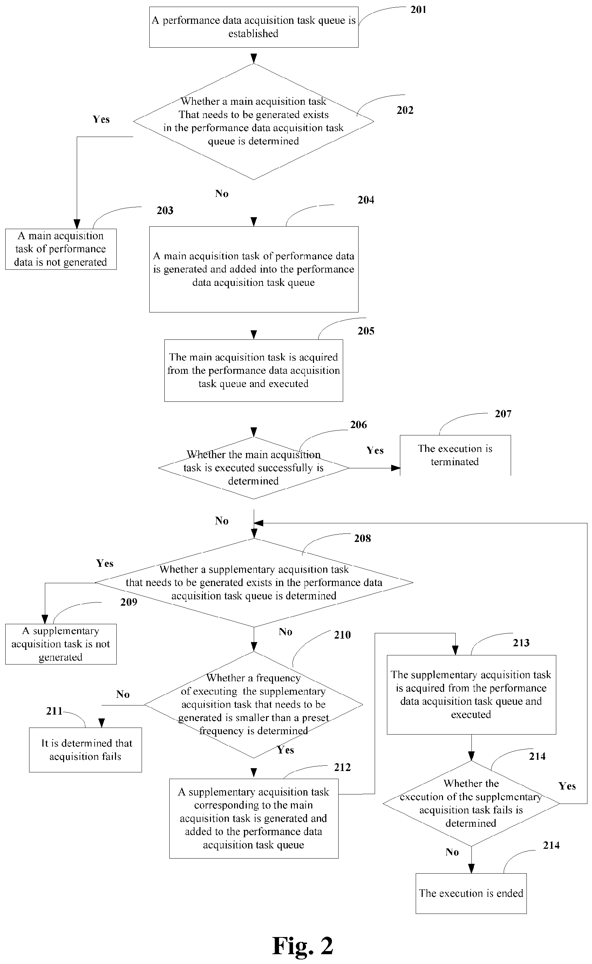

As shown in Fig. 2, a specific process of a method for acquiring the performance data provided by the present embodiment during performance management in the telecommunications network management software system is as follows.
Step 201: A performance data acquisition task queue is established.
Step 202: Whether a main acquisition task that needs to be generated exists in the performance data acquisition task queue is determined. If yes, Step 203 is performed. Otherwise, Step 204 is performed.
Step 203: A main acquisition task of performance data is not generated.
Step 204: A main acquisition task of performance data is generated and added into the performance data acquisition task queue.
Step 205: The main acquisition task is acquired from the performance data acquisition task queue and executed.
Step 206: Whether the main acquisition task is executed successfully is determined. If yes, Step 207 is performed. Otherwise, Step 208 is performed.
Step 207: The execution is terminated.
Step 208: Whether a supplementary acquisition task that needs to be generated exists in the performance data acquisition task queue is determined. If yes, Step 209 is performed. Otherwise, Step 210 is performed.
Step 209: A supplementary acquisition task is not generated.
Step 210: Whether a frequency of executing the supplementary acquisition task that needs to be generated is smaller than a preset frequency is determined. If yes, Step 212 is performed. Otherwise, Step 211 is performed.
Step 211: It is determined that acquisition fails.
Step 212: A supplementary acquisition task corresponding to the main acquisition task is generated and added to the performance data acquisition task queue. The supplementary acquisition task records performance data that requires supplementary acquisition and time points.
Step 213: The supplementary acquisition task is acquired from the performance data acquisition task queue and executed.
Step 214: Whether the execution of the supplementary acquisition task fails is determined. If yes, Step 215 is performed. Otherwise, Step 208 is performed again.
Step 215: The execution is terminated.

The process of acquiring the main acquisition task from the performance data acquisition task queue in Step 205 of the method for acquiring the performance data provided by the present embodiment includes the following steps in order to acquire required performance data accurately and reduce waste of resources.

The main acquisition task is acquired from the performance data acquisition task queue.

Whether performance data that needs to be acquired has been reported is determined according to the main acquisition task. If yes, corresponding performance data is acquired according to the main acquisition task. Otherwise, it is determined that the main acquisition task fails.

After acquisition of corresponding performance data is completed according to the main acquisition task, the method for acquiring the performance data according to the present embodiment further includes the following steps in order to ensure the integrity of the acquired performance data.

Whether the acquired performance data is completed is examined. If not, it is determined that the execution of the main acquisition task fails. If yes, the execution of the main acquisition task has succeeded.

The process of executing the main acquisition task is also applicable to the execution of the supplementary acquisition task.

After it is determined that the execution of the automatically-generated supplementary acquisition task fails, the method for acquiring the performance data provided by the present embodiment further includes the following steps in order to acquire performance data of a current time granularity.

A manual supplementary acquisition instruction inputted by a user is received.

A manual supplementary acquisition task is generated according to the manual supplementary acquisition instruction and added to the performance data acquisition task queue.

The manual supplementary acquisition task is acquired from the performance data acquisition task queue and executed.

If both the main acquisition task and the automatically-generated supplementary acquisition task fail to perform acquisition successfully in the telecommunications network management software system, supplementary acquisition of data may be performed by a manual supplementary acquisition function of performance management. It is ensured by three protection mechanisms for acquisition that complete performance data may be acquired.

Since there are three acquisition tasks in the performance data acquisition task queue in the present embodiment, priorities may be set for the three acquisition tasks in order to ensure that the execution time of the three acquisition tasks are not conflicted and ensure that the main acquisition task is executed preferentially. Generally, it needs to be ensured first that the main acquisition task is executed preferentially when an acquisition task is executed. Therefore, the main acquisition task has the highest priority, and specific restrictive contents are as follows.

Establishing the performance data acquisition task queue in the method for acquiring the performance data of the present embodiment includes that
the performance data acquisition task queue is established; priorities of acquisition tasks are set in the acquisition task queue, wherein a descending order of the priorities of the acquisition tasks is: the main acquisition task, the automatically-generated supplementary acquisition task and the manual supplementary acquisition task.

There are two methods for setting priorities.

The first method includes that the acquisition tasks in the acquisition task queue are arranged according to their respective priorities; when the acquisition tasks are read, the reading only needs to be performed according to a sequence from the head to the rear of the queue, that is, an acquisition task having a higher priority in the acquisition task queue is executed before acquiring from the performance data acquisition task queue, the automatically-generated supplementary acquisition task and the manual supplementary acquisition task and executing the same. An acquisition task having the highest priority is arranged at the head of the queue. When a task is executed, the acquisition task at the head of the queue is acquired first, and then acquisition tasks are acquired according to a sequence of the priorities and executed.

The other method includes that priorities are set in the acquisition task queue. The acquisition tasks are not arranged according to the priorities, but are read according to the priorities of the acquisition tasks when the acquisition tasks are read.

Establishing the performance data acquisition task queue in the method for acquiring the performance data in the present embodiment may also include that the performance data acquisition task queue is established, and the acquisition tasks in the data acquisition task queue are arranged according to a time sequence of generating the acquisition tasks.

A method of arranging the acquisition tasks in the queue according to the present embodiment may not only include that the acquisition tasks are arranged according to the priorities, but also include that the acquisition tasks are arranged according to the time when each acquisition task is generated. An acquisition task that is generated first is arranged at the head of the queue and an acquisition task that is generated subsequently is arranged at the rear of the queue. When the acquisition tasks are read and executed, the acquisition tasks are acquired from the head of the queue all the way to the rear of the queue in sequence and executed, or the generated tasks are sorted according to the time when the tasks are generated in combination with the priorities of the tasks.

A value of a time interval at which a main acquisition task is generated is different from a value of a time interval at which a supplementary acquisition task is generated in the present embodiment in order to prevent time conflict between generation of the main acquisition task and generation of the supplementary acquisition task. If it may be set that a main acquisition task is generated every 1 hour, timing is started when execution of the main acquisition task fails, and a supplementary acquisition task is generated only when the timing reaches 61 minutes, thereby staggering the time when the two acquisition tasks are generated.

The method for acquiring the performance data provided by the present embodiment solves the problem of delayed reporting of performance data due to a network reason or a failure of a network element device, and has the beneficial effect of ensuring the integrity of the performance data on a time granularity.

### Embodiment 2

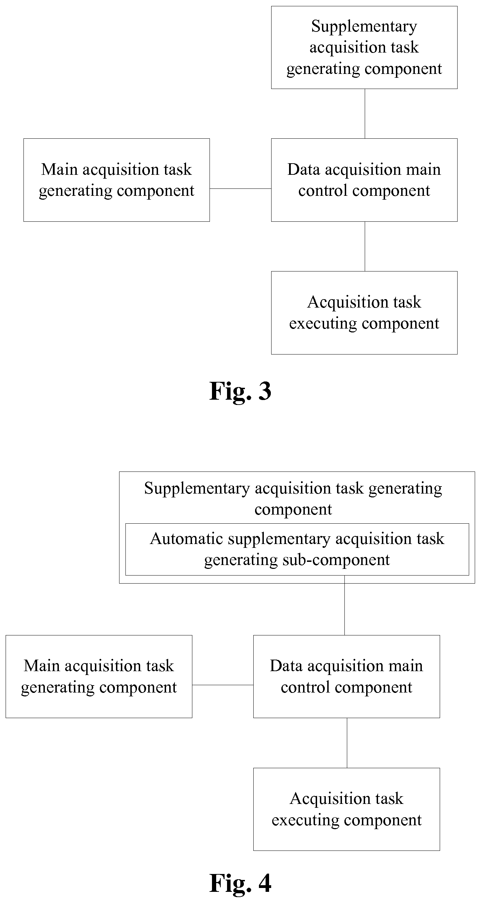

Data acquired in the present embodiment may be performance data in a telecommunications software system. As shown in Fig. 3, the present embodiment provides a device for acquiring the performance data, wherein the device includes: a data acquisition main control component, a main acquisition task generating component, a supplementary acquisition task generating component and an acquisition task executing component;
the data acquisition main control component is configured to establish a data acquisition task queue;
the main acquisition task generating component is configured to generate a main acquisition task of data and add the main acquisition task into the data acquisition task queue;
the acquisition task executing component is configured to acquire the main acquisition task from the data acquisition task queue and execute the same;
the supplementary acquisition task generating component is configured to generate, when the execution of the main acquisition task fails, a supplementary acquisition task corresponding to the main acquisition task and add the same into the data acquisition task queue.
the acquisition task executing component is further configured to acquire the supplementary acquisition task from the data acquisition task queue and execute the same.

As shown in Fig. 4, the supplementary acquisition task generating component in the present embodiment includes an automatic supplementary acquisition task generating sub-component; the automatic supplementary acquisition task generating sub-component is configured to generate, after receiving a failure notification of the main acquisition task, the supplementary acquisition task automatically after a time interval, and add the same into the data acquisition task queue;
or the automatic supplementary acquisition task generating sub-component is configured to generate, after receiving a failure notification of the main acquisition task, the supplementary acquisition task automatically and immediately and add the same into the data acquisition task queue.

In the present embodiment, the automatic supplementary acquisition task generating sub-component generates, after receiving the failure notification of the main acquisition task, the supplementary acquisition task automatically at a time interval, and adds the same into the data acquisition task queue in the following two situations.
1. The automatic supplementary acquisition task generating sub-component is configured to, when the execution of the acquisition task fails, start timing, and generate the corresponding supplementary acquisition task automatically after the timing reaches a time and add the same into the data acquisition task queue.
2. The automatic supplementary acquisition task generating sub-component is configured to perform a step that when the execution of the acquisition task fails, starts a delay, after the delay lasts for a period of time, start timing, and after the timing reaches a certain period of time, generate the corresponding supplementary acquisition task automatically added the same into the data acquisition task queue.

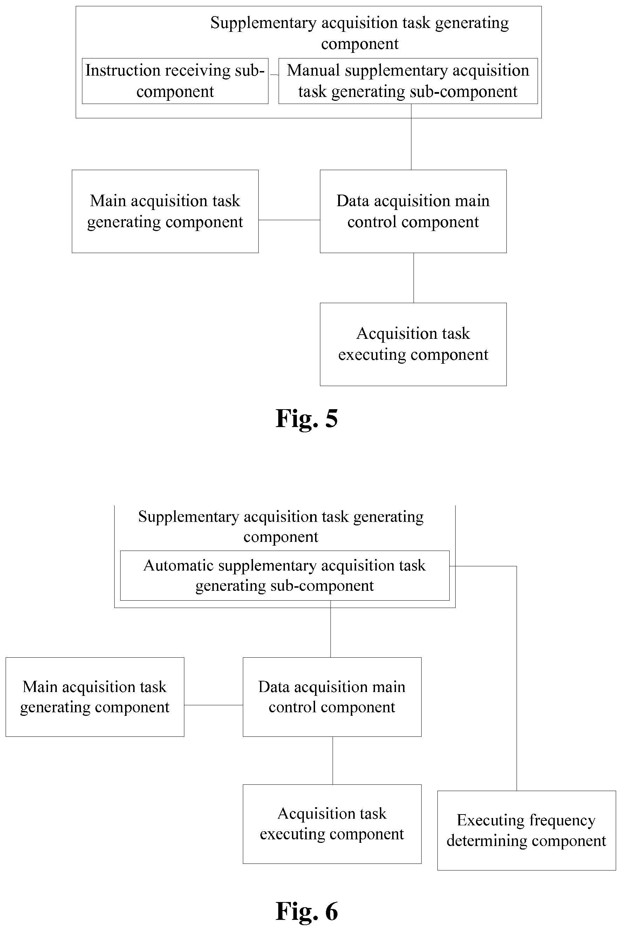

As shown in Fig. 5, the supplementary acquisition task generating component in the present embodiment may include: an instruction receiving sub-component and a manual supplementary acquisition task generating sub-component;
the instruction receiving sub-component is configured to receive, after receiving a failure notification of the main acquisition task, a manual supplementary acquisition instruction;
the manual supplementary acquisition task generating sub-component is configured to generate, according to the manual supplementary acquisition instruction, a manual supplementary acquisition task and add the same into the data acquisition task queue.

The device may allow working personnel to input an acquisition instruction manually after the execution of the main acquisition task fails so as to generate a corresponding acquisition task to acquire missing data.

As shown in Fig. 6, the device for acquiring the data provided by the present embodiment further includes: an execution frequency determining component; the execution frequency determining component is configured to determine, when the execution of the supplementary acquisition task fails, whether a frequency of executing the supplementary acquisition task is smaller than a preset frequency; if yes, notify the automatic supplementary acquisition task generating sub-component to regenerate the supplementary acquisition task corresponding to the main acquisition task and add the same into the data acquisition task queue; otherwise, determine that the execution of the automatically-generated supplementary acquisition task fails.

The main acquisition task generating component in the present embodiment is configured to generate a main acquisition task of data at a time interval and add the main acquisition task into the data acquisition task queue, wherein a value of the time interval at which a main acquisition task of data is generated is different from a value of a time interval at which a supplementary acquisition task is generated, thereby preventing time conflict between generation of the main acquisition task and generation of the supplementary acquisition task.

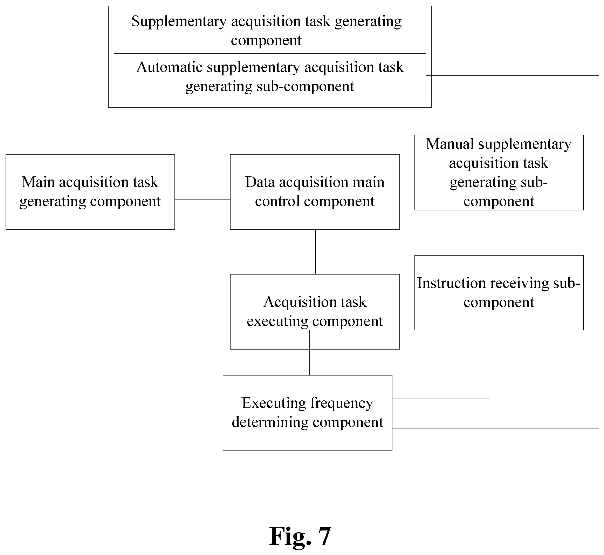

As shown in Fig. 7, when it is determined that the execution of the automatically-generated supplementary acquisition task fails, the device for acquiring the data of the present embodiment may further include:
an instruction receiving component configured to receive a manual supplementary acquisition instruction after it is determined that the execution of the automatically-generated supplementary acquisition task fails;
an manual supplementary acquisition task generating component configured to generate, according to the manual supplementary acquisition instruction, a manual supplementary acquisition task and add the same into the data acquisition task queue;
the acquisition task executing component is further configured to acquire the manual supplementary acquisition task from the data acquisition task queue and execute the same.

The acquisition task executing component in the present embodiment may acquire, according to the priorities of the acquisition tasks in the data queue, an acquisition task that needs to be executed, or may acquire, according to the time when the acquisition tasks are generated, a task that needs to be executed.

A plurality of any components among the components of the present embodiment may be arranged in the same integrated circuit or component according to a technical requirement. For example, the manual supplementary acquisition task generating component and the instruction receiving component are arranged in the same component.

In a practical application, the acquisition device of the present embodiment may be implemented by two working threads and two timers. In the present embodiment, the data main control component may be a data acquisition numerical control thread, the main acquisition task generating component may be a data main acquisition timer, the automatic supplementary acquisition task generating sub-component may be an automatic supplementary acquisition timer and the manual supplementary acquisition task generating component or sub-component may be a manual supplementary acquisition monitoring thread.

The data acquisition numerical control thread establishes a data acquisition task queue and is responsible for monitoring and maintaining the data acquisition task queue.

The data main acquisition timer is responsible for periodically generating main acquisition task for acquisition of performance data and adding the same into the queue.

The automatic supplementary acquisition timer is responsible for generating a supplementary acquisition task for the performance data automatically and immediately and adding the same into the queue.

The manual supplementary acquisition monitoring thread monitors a manual supplementary acquisition message, and when the supplementary acquisition message is received, the manual supplementary acquisition monitoring thread is responsible for generating a supplementary acquisition task for the performance data and adding the same into the queue.

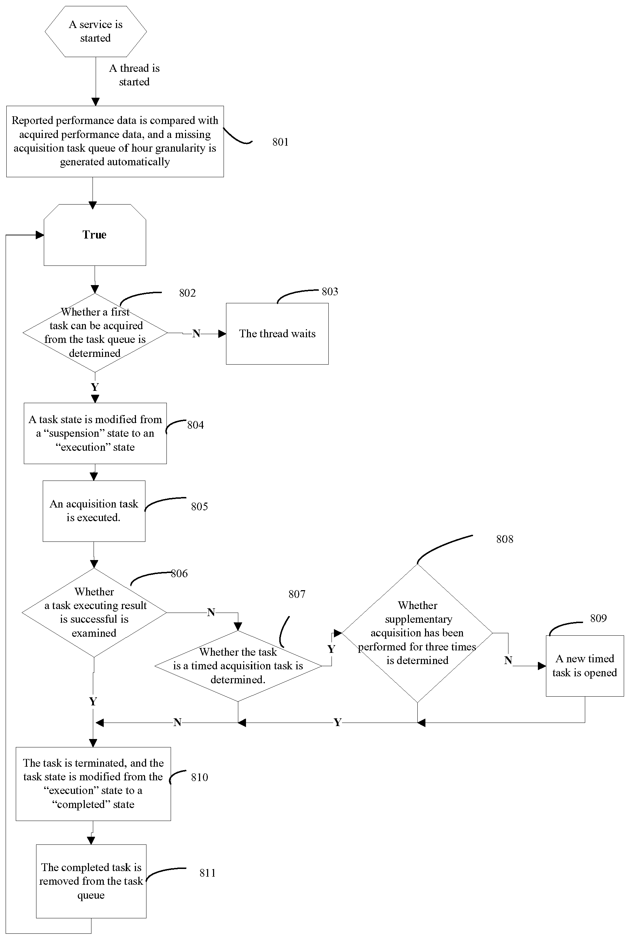

Fig. 8 shows a working process of the data acquisition numerical control thread and the acquisition task executing component of the present embodiment as follows.
Step 801: Reported performance data is compared with acquired performance data when a main controller is initialized, and a missing acquisition task queue of hour granularity is generated automatically.
Step 802: Whether a first task can be acquired from the task queue is determined. If not, Step 803 is performed. Otherwise, Step 804 is performed.
Step 803: A thread is suspended and waits to be awakened.
Step 804: A task state is modified from a "suspension" state to an "execution" state.
Step 805: An acquisition task is executed.
Step 806: A task executing result is examined. If the execution succeeds, Step 810 is performed.
Step 807: Whether the task is a timed acquisition task (a main acquisition task or a supplementary acquisition task) is determined. If no, Step 810 is performed.
Step 808: Whether an automatic supplementary acquisition frequency of the acquisition task has exceeded 0 time is examined. If yes, Step 810 is performed.
Step 809: A new timed task is opened, i.e. a timed task for automatic supplementary acquisition is added.
Step 810: The execution of the acquisition task is terminated, and the task state is modified from the "execution" state to a "completed" state.
Step 811: The completed acquisition task is removed from the task queue.

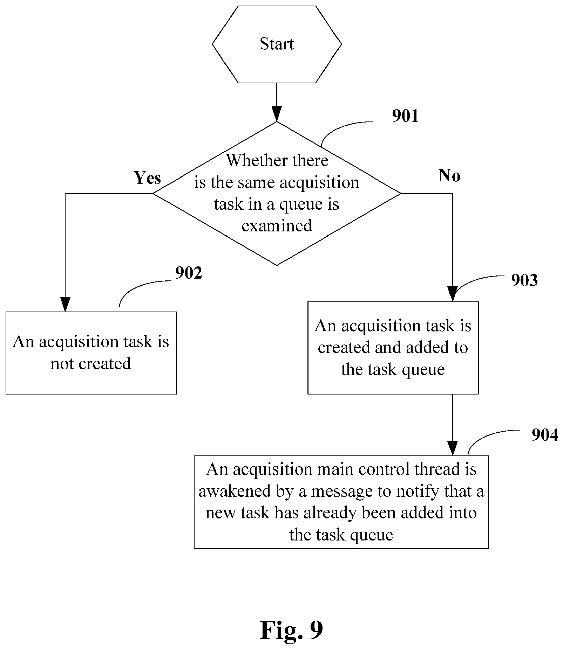

Fig. 9 shows steps of a processing flow of the data main acquisition timer and the automatic supplementary acquisition timer.
Step 901: Whether there is the same acquisition task in a queue is examined. If yes, Step 902 is performed. Otherwise, Step 903 is performed.
Step 902: An acquisition task is not created.
Step 903: An acquisition task is created and added to the task queue.
Step 904: An acquisition main control thread is awakened by a message to notify that a new task has already been added into the task queue.

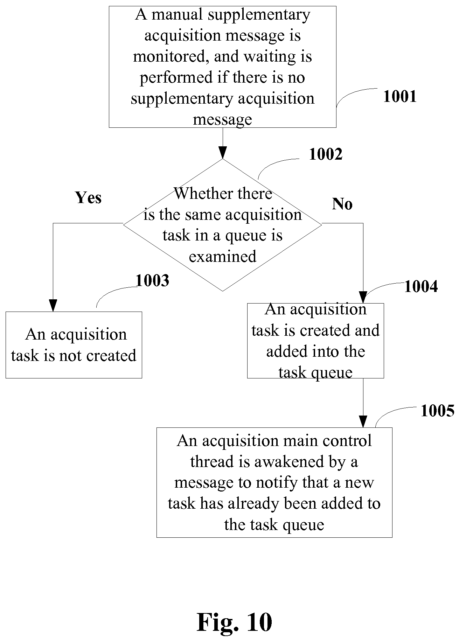

Fig. 10 shows steps of a processing flow of the manual supplementary acquisition monitoring thread.
Step 1001: A manual supplementary acquisition message is monitored, and waiting is performed if there is no supplementary acquisition message.
Step 1002: Whether there is the same acquisition task in a queue is examined. If yes, Step 1003 is performed. Otherwise, Step 1004 is performed.
Step 1003: An acquisition task is not created.
Step 1004: An acquisition task is created and added into the task queue.
Step 1005: An acquisition main control thread is awakened by a message to notify that a new task has already been added to the task queue.

Through the description of the preceding embodiments, persons skilled in the art may clearly understand that the present invention may be implemented by software in combination with a hardware platform. Based on such understanding, all or a part of technical solutions of the present invention, which contribute to the background art, may be embodied in a form of a software product. The computer software product may be stored in a storage medium, such as a Read-Only Memory (ROM) /a Random-Access Memory (RAM), a magnetic disk, an optical disk and on so, including several instructions to make a computer device (which may be a personal computer, a server, or a network device and on so) execute the method described in each embodiment or some parts of the embodiments of the present invention.

The foregoing content is further detailed description of the present invention in conjunction with specific embodiments, and the specific embodiments of the present invention shall not be deemed as being limited to such description. For those of ordinary skill in the art, several simple deductions or replacements may be further made without departing from the concept of the present invention and shall be viewed as belonging to the scope of protection of the present invention.

### Industrial Applicability

As described above, a method and device for acquiring the data provided by the embodiments of the present invention have the following beneficial effect. A data acquisition task queue is established; a main acquisition task of data is generated and the main acquisition task is added into the data acquisition task queue; the main acquisition task is acquired from the data acquisition task queue and executed; and after the execution of the main acquisition task fails, a supplementary acquisition task corresponding to the main acquisition task is generated and added into the data acquisition task queue; and the supplementary acquisition task is acquired from the data acquisition task queue and executed. After the main acquisition task fails, the corresponding supplementary acquisition task is generated to continue to acquire data that has not been acquired, thereby ensuring the integrity of the data. If performance data is acquired at the moment, the integrity of the performance data is ensured. In addition, an embodiment of the present invention separates a task executing process from a task generating process through establishing an acquisition task queue, thus avoiding the problem of delayed execution of an acquisition task.

## Claims

1. A method for acquiring performance data of a telecommunications network, **characterized by** comprising:
establishing, by a telecommunications network management system, a performance data acquisition task queue;
generating, by the telecommunications network management system, a main acquisition task of performance data and adding the main acquisition task into the performance data acquisition task queue;
acquiring, by the telecommunications network management system, the main acquisition task from the performance data acquisition task queue and executing the main acquisition task, and after the execution of the main acquisition task fails, generating a supplementary acquisition task corresponding to the main acquisition task and adding the supplementary acquisition task into the performance data acquisition task queue;
acquiring and executing, by the telecommunications network management system, the supplementary acquisition task from the performance data acquisition task queue.

2. The method for acquiring the performance data according to claim 1, **characterized in that** after the main acquisition task fails, generating the supplementary acquisition task corresponding to the main acquisition task and adding the supplementary acquisition task into the performance data acquisition task queue comprises:
after receiving a failure notification of the main acquisition task, generating the supplementary acquisition task automatically after a time interval, and adding the supplementary acquisition task into the performance data acquisition task queue; or
after receiving a failure notification of the main acquisition task, generating the supplementary acquisition task automatically and immediately and adding the supplementary acquisition task into the performance data acquisition task queue.

3. The method for acquiring the performance data according to claim 2, **characterized in that** the method further comprises:
when the execution of the supplementary acquisition task fails, determining whether a frequency of executing the supplementary acquisition task is smaller than a preset frequency; if the frequency of executing the supplementary acquisition task is smaller than the preset frequency, regenerating the supplementary acquisition task which fails to be executed, and adding the supplementary acquisition task into the performance data acquisition task queue; otherwise, determining that the execution of the automatically-generated supplementary acquisition task fails.

4. The method for acquiring the performance data according to claim 3, **characterized in that** generating the main acquisition task of the performance data and adding the main acquisition task into the performance data acquisition task queue comprises:
generating the main acquisition task of performance data at a time interval and adding the generated main acquisition task into the performance data acquisition task queue, wherein a value of the time interval at which the main acquisition task of performance data is generated is different from a value of a time interval at which a supplementary acquisition task is generated.

5. The method for acquiring the performance data according to claim 4, **characterized in that** after it is determined that the execution of the automatically-generated supplementary acquisition task fails, the method further comprises:
receiving a manual supplementary acquisition instruction inputted by a user;
generating, according to the manual supplementary acquisition instruction, a manual supplementary acquisition task and adding the manual supplementary acquisition task into the performance data acquisition task queue;
acquiring the manual supplementary acquisition task from the performance data acquisition task queue and executing the manual supplementary acquisition task.

6. The method for acquiring the performance data according to claim 5, **characterized in that** establishing the performance data acquisition task queue comprises:
establishing the performance data acquisition task queue and setting priorities of acquisition tasks in the acquisition task queue, wherein a descending order of the priorities of the acquisition tasks is: the main acquisition task, the automatically-generated supplementary acquisition task and the manual supplementary acquisition task;
or
establishing the performance data acquisition task queue comprises: establishing the performance data acquisition task queue, and arranging acquisition tasks in the performance data acquisition task queue according to a time sequence of generating the acquisition tasks.

7. The method for acquiring the performance data according to claim 1, **characterized in that** after the main acquisition task fails, generating the supplementary acquisition task corresponding to the main acquisition task and adding the supplementary acquisition task into the performance data acquisition task queue comprises:
after receiving a failure notification of the main acquisition task, receiving a manual supplementary acquisition instruction inputted by a user;
generating a manual supplementary acquisition task according to the manual supplementary acquisition instruction and adding the manual supplementary acquisition task into the performance data acquisition task queue.

8. A telecommunications network management system for acquiring the performance data of a telecommunications network, **characterized by** comprising:
a performance data acquisition main control component, a main acquisition task generating component, a supplementary acquisition task generating component and an acquisition task executing component, wherein
the performance data acquisition main control component is configured to establish a performance data acquisition task queue;
the main acquisition task generating component is configured to generate a main acquisition task of performance data and add the main acquisition task into the performance data acquisition task queue;
the acquisition task executing component is configured to acquire an acquisition task from the performance data acquisition task queue and execute the acquisition task;
the supplementary acquisition task generating component is configured to generate, after the execution of the main acquisition task fails, a supplementary acquisition task corresponding to the main acquisition task and add the supplementary acquisition task into the performance data acquisition task queue.

9. The telecommunications network management system for acquiring the performance data according to claim 8, **characterized in that** the supplementary acquisition task generating component comprises an automatic supplementary acquisition task generating sub-component;
wherein the automatic supplementary acquisition task generating sub-component is configured to generate, after receiving a failure notification of the main acquisition task, the supplementary acquisition task automatically after a time interval, and add the supplementary acquisition task into the performance data acquisition task queue; or
the automatic supplementary acquisition task generating sub-component is configured to generate, after receiving a failure notification of the main acquisition task, the supplementary acquisition task automatically and immediately and add the supplementary acquisition task into the performance data acquisition task queue.

10. The telecommunications network management system for acquiring the performance data according to claim 9, **characterized in that** the device for acquiring the performance data further comprises: an execution frequency determining component; the execution frequency determining component is configured to determine, when the execution of the supplementary acquisition task fails, whether a frequency of executing the supplementary acquisition task is smaller than a preset frequency; if the frequency of executing the supplementary acquisition task is smaller than the preset frequency, notify the automatic supplementary acquisition task generating sub-component to regenerate the supplementary acquisition task which fails to be executed and add the regenerated supplementary acquisition task into the performance data acquisition task queue; otherwise, determine that the execution of the automatically-generated supplementary acquisition task fails.

11. The telecommunications network management system for acquiring the data according to claim 10, **characterized in that** the main acquisition task generating component is configured to generate a main acquisition task of performance data at a time interval and add the main acquisition task into the performance data acquisition task queue, wherein a value of the time interval at which a main acquisition task of performance data is generated is different from a value of a time interval at which a supplementary acquisition task is generated.

12. The telecommunications network management system for acquiring the performance data according to claim 11, **characterized in that** the device for acquiring the performance data further comprises: an instruction receiving component and a manual supplementary acquisition task generating component;
the instruction receiving component is configured to receive, after it is determined that the execution of the automatically-generated supplementary acquisition task fails, a manual supplementary acquisition instruction;
the manual supplementary acquisition task generating component is configured to generate, according to the manual supplementary acquisition instruction, a manual supplementary acquisition task and add the manual supplementary acquisition task into the performance data acquisition task queue;
the acquisition task executing component is further configured to acquire the manual supplementary acquisition task from the performance data acquisition task queue and execute the manual supplementary acquisition task.

13. The telecommunications network management system for acquiring the performance data according to claim 8, **characterized in that** the supplementary acquisition task generating component comprises: an instruction receiving sub-component and a manual supplementary acquisition task generating sub-component;
the instruction receiving sub-component is configured to receive, after receiving a failure notification of the main acquisition task, a manual supplementary acquisition instruction;
the manual supplementary acquisition task generating sub-component is configured to generate, according to the manual supplementary acquisition instruction, a manual supplementary acquisition task and add the manual supplementary acquisition task into the performance data acquisition task queue.

## Patentansprüche

1. Ein Verfahren zum Erfassen von Leistungsdaten eines Telekommunikationsnetzes, **dadurch gekennzeichnet, dass** es Folgendes umfasst:
Erstellen, durch ein Telekommunikationsnetz-Verwaltungssystem, einer Leistungsdatenerfassungs-Auftragsschlange;
Erzeugen, durch das Telekommunikationsnetz-Verwaltungssystem, eines Haupt-Erfassungsauftrags für Leistungsdaten und Hinzufügen des Haupt-Erfassungsauftrags zu der Leistungsdatenerfassungs-Auftragsschlange;
Erfassen, durch das Telekommunikationsnetz-Verwaltungssystem, des Haupt-Erfassungsauftrags aus der Leistungsdatenerfassungs-Auftragsschlange und Ausführen des Haupt-Erfassungsauftrags, und wenn das Ausführen des Haupt-Erfassungsauftrags scheitert, Erzeugen eines zusätzlichen Erfassungsauftrags, der dem Haupt-Erfassungsauftrag entspricht, und Hinzufügen des zusätzlichen Erfassungsauftrags zu der Leistungsdatenerfassungs-Auftragsschlange;
Erfassen und Ausführen, durch das Telekommunikationsnetz-Verwaltungssystem, des zusätzlichen Erfassungsauftrags aus der Leistungsdatenerfassungs-Auftragsschlange.

2. Das Verfahren zum Erfassen der Leistungsdaten gemäß Anspruch 1, **dadurch gekennzeichnet, dass**, nachdem der Haupt-Erfassungsauftrag gescheitert ist, das Erzeugen des zusätzlichen Erfassungsauftrags, der dem Haupt-Erfassungsauftrag entspricht, und das Hinzufügen des zusätzlichen Erfassungsauftrags zu der Leistungsdatenerfassungs-Auftragsschlange Folgendes umfasst:
nach Empfangen einer Fehlermeldung für den Haupt-Erfassungsauftrag, automatisches Erzeugen des zusätzlichen Erfassungsauftrags nach einem Zeitintervall, und Hinzufügen des zusätzlichen Erfassungsauftrags zu der Leistungsdatenerfassungs-Auftragsschlange; oder
nach Empfangen einer Fehlermeldung für den Haupt-Erfassungsauftrag, automatisches und sofortiges Erzeugen des zusätzlichen Erfassungsauftrags und Hinzufügen des zusätzlichen Erfassungsauftrags zu der Leistungsdatenerfassungs-Auftragsschlange.

3. Das Verfahren zum Erfassen der Leistungsdaten gemäß Anspruch 2, **dadurch gekennzeichnet, dass** das Verfahren weiter Folgendes umfasst:
wenn das Ausführen des zusätzlichen Erfassungsauftrags scheitert, Feststellen, ob eine Frequenz des Ausführens des zusätzlichen Erfassungsauftrags geringer ist als eine vordefinierte Frequenz; wenn die Frequenz des Ausführens des zusätzlichen Erfassungsauftrags geringer ist als die vordefinierte Frequenz, Regenerieren des zusätzlichen Erfassungsauftrags, der nicht ausgeführt werden kann, und Hinzufügen des zusätzlichen Erfassungsauftrags zu der Leistungsda.tenerfassungs-Auftragsschlange; anderenfalls Feststellen, dass das Ausführen des automatisch erzeugten zusätzlichen Erfassungsauftrags gescheitert ist.

4. Das Verfahren zum Erfassen der Leistungsdaten gemäß Anspruch 3, **dadurch gekennzeichnet, dass** das Erzeugen des Haupt-Erfassungsauftrags für die Leistungsdaten und das Hinzufügen des Haupt-Erfassungsauftrags zu der Leistungsdatenerfassungs-Auftragsschlange Folgendes umfasst:
Erzeugen des Haupt-Erfassungsauftrags für Leistungsdaten in einem Zeitintervall und Hinzufügen des erzeugten Haupt-Erfassungsauftrags zu der Leistungsdatenerfassungs-Auftragsschlange, wobei ein Wert des Zeitintervalls, in dem der Haupt-Erfassungsauftrag für Leistungsdaten erzeugt wird, sich von einem Wert eines Zeitintervalls unterscheidet, in dem ein zusätzlicher Erfassungsauftrag erzeugt wird.

5. Das Verfahren zum Erfassen der Leistungsdaten gemäß Anspruch 4, **dadurch gekennzeichnet, dass**, nachdem festgestellt wurde, dass das Ausführen des automatisch erzeugten zusätzlichen Erfassungsauftrags gescheitert ist, das Verfahren weiter Folgendes umfasst:
Empfangen einer manuellen zusätzlichen Erfassungsanweisung, die von einem Benutzer eingegeben wird;
Erzeugen, entsprechend der manuellen zusätzlichen Erfassungsanweisung, eines manuellen zusätzlichen Erfassungsauftrags und Hinzufügen des manuellen zusätzlichen Erfassungsauftrags zu der Leistungsdatenerfassungs-Auftragsschlange;
Erfassen des manuellen zusätzlichen Erfassungsauftrags aus der Leistungsdatenerfassungs-Auftragsschlange und Ausführen des manuellen zusätzlichen Erfassungsauftrags.

6. Das Verfahren zum Erfassen der Leistungsdaten gemäß Anspruch 5, **dadurch gekennzeichnet, dass** das Erstellen der Leistungsdatenerfassungs-Auftragsschlange Folgendes umfasst:
Erstellen der Leistungsdatenerfassungs-Auftragsschlange und Setzen von Prioritäten für Erfassungsaufträge in der Erfassungs-Auftragsschlange, wobei eine absteigende Reihenfolge der Prioritäten der Erfassungsaufträge wie folgt ist: der Haupt-Erfassungsauftrag, der automatisch erzeugte zusätzliche Erfassungsauftrag und der manuelle zusätzliche Erfassungsauftrag;
oder
das Erstellen der Leistungsdatenerfassungs-Auftragsschlange Folgendes umfasst: Erstellen der Leistungsdatenerfassungs-Auftragsschlange und Anordnen von Erfassungsaufträgen in der Leistungsdatenerfassungs-Auftragsschlange entsprechend einer zeitlichen Folge des Erzeugens der Erfassungsaufträge.

7. Das Verfahren zum Erfassen der Leistungsdaten gemäß Anspruch 1, **dadurch gekennzeichnet, dass**, nachdem der Haupt-Erfassungsauftrag gescheitert ist, das Erzeugen des zusätzlichen Erfassungsauftrags, der dem Haupt-Erfassungsauftrag entspricht, und das Hinzufügen des zusätzlichen Erfassungsauftrags zur Leistungsdatenerfassungs-Auftragsschlange Folgendes umfasst:
nach Empfangen einer Fehlermeldung für den Haupt-Erfassungsauftrag, Empfangen einer manuellen zusätzlichen Erfassungsanweisung, die von einem Benutzer eingegeben wird;
Erstellen eines manuellen zusätzlichen Erfassungsauftrags entsprechend der manuellen zusätzlichen Erfassungsanweisung und Hinzufügen des manuellen zusätzlichen Erfassungsauftrags zur Leistungsdatenerfassungs-Auftragsschlange.

8. Ein Telekommunikationsnetz-Verwaltungssystem zum Erfassen der Leistungsdaten eines Telekommunikationsnetzes, **dadurch gekennzeichnet, dass** es Folgendes umfasst:
eine Haupt-Leistungsdatenerfassungs-Steuerkomponente, eine Haupt-Erfassungsauftrags-Erstellungskomponente, eine Erstellungskomponente für den zusätzlichen Erfassungsauftrag und eine Erfassungsauftrags-Ausführkomponente, wobei
die Haupt-Leistungsdatenerfassungs-Steuerkomponente konfiguriert ist, um eine Leistungsdatenerfassungs-Auftragsschlange zu erstellen;
die Haupt-Erfassungsauftrags-Erstellungskomponente konfiguriert ist, um einen Haupt-Erfassungsauftrag für Leistungsdaten zu erstellen und den Haupt-Erfassungsauftrag zu der Leistungsdatenerfassungs-Auftragsschlange hinzuzufügen;
die Erfassungsauftrags-Ausführkomponente konfiguriert ist, um einen Erfassungsauftrag aus der Leistungsdatenerfassungs-Auftragsschlange zu erfassen und den Erfassungsauftrag auszuführen;
die Erstellungskomponente für den zusätzlichen Erfassungsauftrag konfiguriert ist, um, nachdem die Ausführung des Haupt-Erfassungsauftrags gescheitert ist, einen zusätzlichen Erfassungsauftrag zu erstellen, der dem Haupt-Erfassungsauftrag entspricht, und den zusätzlichen Erfassungsauftrag zur Leistungsdatenerfassungs-Auftragsschlange hinzuzufügen.

9. Das Telekommunikationsnetz-Verwaltungssystem zum Erfassen der Leistungsdaten gemäß Anspruch 8, **dadurch gekennzeichnet, dass** die Erstellungskomponente für den zusätzlichen Erfassungsauftrag eine Teilkomponente für die automatische Erstellung des zusätzlichen Erfassungsauftrags umfasst;
wobei die Teilkomponente für die automatische Erstellung des zusätzlichen Erfassungsauftrags konfiguriert ist, um, nach Empfang einer Fehlermeldung für den Haupt-Erfassungsauftrag, den zusätzlichen Erfassungsauftrag automatisch nach einem Zeitintervall zu erstellen und den zusätzlichen Erfassungsauftrag zu der Leistungsdatenerfassungs-Auftragsschlange hinzuzufügen; oder
die Teilkomponente für die automatische Erstellung des zusätzlichen Erfassungsauftrags konfiguriert ist, um, nach Empfang einer Fehlermeldung für den Haupt-Erfassungsauftrag, den zusätzlichen Erfassungsauftrag automatisch sofort zu erstellen und den zusätzlichen Erfassungsauftrag zur Leistungsdatenerfassungs-Auftragsschlange hinzuzufügen.

10. Das Telekommunikationsnetz-Verwaltungssystem zum Erfassen der Leistungsdaten gemäß Anspruch 9, **dadurch gekennzeichnet, dass** die Vorrichtung zum Erfassen der Leistungsdaten weiter Folgendes umfasst: eine Ausführungsfrequenz-Bestimmungskomponente; die Ausführungsfrequenz-Bestimmungskomponente ist konfiguriert, um, wenn die Ausführung des zusätzlichen Erfassungsauftrags scheitert, zu bestimmen, ob eine Frequenz der Ausführung des zusätzlichen Erfassungsauftrags kleiner ist als eine voreingestellte Frequenz; wenn die Frequenz der Ausführung des zusätzlichen Erfassungsauftrags kleiner ist als die voreingestellte Frequenz, die Teilkomponente für die automatische Erstellung des zusätzlichen Erfassungsauftrags aufzufordern, den zusätzlichen Erfassungsauftrag, der nicht ausgeführt werden kann, zu regenerieren und den regenerierten zusätzlichen Erfassungsauftrag zur Leistungsdatenerfassungs-Auftragsschlange hinzuzufügen; anderenfalls festzustellen, dass die Ausführung des automatisch erzeugten zusätzlichen Erfassungsauftrags gescheitert ist.

11. Das Telekommunikationsnetz-Verwaltungssystem zum Erfassen der Daten gemäß Anspruch 10, **dadurch gekennzeichnet, dass** die Haupt-Erfassungsauftrags-Erstellungskomponente konfiguriert ist, um einen Haupt-Erfassungsauftrag für Leistungsdaten in einem Zeitintervall zu erstellen und den Haupt-Erfassungsauftrag zu der Leistungsdatenerfassungs-Auftragsschlange hinzuzufügen; wobei ein Wert des Zeitintervalls, in dem ein Haupt-Erfassungsauftrag für Leistungsdaten erstellt wird, sich von einem Wert eines Zeitintervalls unterscheidet, in dem ein zusätzlicher Erfassungsauftrag erstellt wird.

12. Das Telekommunikationsnetz-Verwaltungssystem zum Erfassen der Leistungsdaten gemäß Anspruch 11, **dadurch gekennzeichnet, dass** die Vorrichtung zum Erfassen der Leistungsdaten weiter Folgendes umfasst: eine Anweisungs-Empfangskomponente und eine Komponente zur manuellen Erstellung eines zusätzlichen Erfassungsauftrags;
die Anweisungs-Empfangskomponente konfiguriert ist, um, nachdem festgestellt wurde, dass die Ausführung des automatisch erzeugten zusätzlichen Erfassungsauftrags gescheitert ist, eine manuelle zusätzliche Erfassungsanweisung zu erhalten;
die Komponente zur manuellen Erstellung eines zusätzlichen Erfassungsauftrags konfiguriert ist, um, entsprechend der manuellen zusätzlichen Erfassungsanweisung, einen manuellen zusätzlichen Erfassungsauftrag zu erstellen und den manuellen zusätzlichen Erfassungsauftrag zu der Leistungsdatenerfassungs-Auftragsschlange hinzuzufügen;
die Erfassungsauftrag-Ausführkomponente weiter konfiguriert ist, um den manuellen zusätzlichen Erfassungsauftrag aus der Leistungsdatenerfassungs-Auftragsschlange zu erfassen und den manuellen zusätzlichen Erfassungsauftrag auszuführen.

13. Das Telekommunikationsnetz-Verwaltungssystem zum Erfassen der Leistungsdaten gemäß Anspruch 8, **dadurch gekennzeichnet, dass** die Erstellungskomponente für den zusätzlichen Erfassungsauftrag Folgendes umfasst: eine Anweisungsempfangs-Teilkomponente und eine Teilkomponente für die manuelle Erstellung des zusätzlichen Erfassungsauftrags;
die Anweisungsempfang-Teilkomponente konfiguriert ist, um, nach dem Empfang einer Fehlermeldung für den Haupt-Erfassungsauftrag, eine manuelle zusätzliche Erfassungsanweisung zu empfangen;
die Teilkomponente zur manuellen Erstellung des zusätzlichen Erfassungsauftrags konfiguriert ist, um entsprechend der manuellen zusätzlichen Erfassungsanweisung einen manuellen zusätzlichen Erfassungsauftrag zu erstellen und den manuellen zusätzlichen Erfassungsauftrag zur Leistungsdatenerfassungs-Auftragsschlange hinzuzufügen.

## Revendications

1. Procédé d'acquisition de données de performance d'un réseau de télécommunications, **caractérisé en ce qu'**il comprend :
l'établissement, par un système de gestion de réseau de télécommunications, d'une file d'attente de tâches d'acquisition de données de performance ;
la génération, par le système de gestion de réseau de télécommunications, d'une tâche d'acquisition principale de données de performance et l'ajout de la tâche d'acquisition principale à la file d'attente de tâches d'acquisition de données de performance ;
l'acquisition, par le système de gestion de réseau de télécommunications, de la tâche d'acquisition principale à partir de la file d'attente de tâches d'acquisition de données de performance et l'exécution de la tâche d'acquisition principale, et après que l'exécution de la tâche d'acquisition principale a échoué, la génération d'une tâche d'acquisition supplémentaire correspondant à la tâche d'acquisition principale et l'ajout de la tâche d'acquisition supplémentaire à la file d'attente de tâches d'acquisition de données de performance ;
l'acquisition et l'exécution, par le système de gestion de réseau de télécommunications, de la tâche d'acquisition supplémentaire à partir de la file d'attente de tâches d'acquisition de données de performance.

2. Procédé d'acquisition de données de performance selon la revendication 1, **caractérisé en ce qu'**après que la tâche d'acquisition principale a échoué, la génération de la tâche d'acquisition supplémentaire correspondant à la tâche d'acquisition principale et l'ajout de la tâche d'acquisition supplémentaire à la file d'attente de tâches d'acquisition de données de performance comprennent :
après réception d'une notification d'échec de la tâche d'acquisition principale, la génération de la tâche d'acquisition supplémentaire automatiquement après un intervalle de temps, et l'ajout de la tâche d'acquisition supplémentaire à la file d'attente de tâches d'acquisition de données de performance ; ou
après réception d'une notification d'échec de la tâche d'acquisition principale, la génération de la tâche d'acquisition supplémentaire automatiquement et immédiatement et l'ajout de la tâche d'acquisition supplémentaire à la file d'attente de tâches d'acquisition de données de performance.

3. Procédé d'acquisition de données de performance selon la revendication 2, **caractérisé en ce que** le procédé comprend en outre :
lorsque l'exécution de la tâche d'acquisition supplémentaire échoue, la détermination du point de savoir si une fréquence d'exécution de la tâche d'acquisition supplémentaire est inférieure à une fréquence prédéfinie ou non ; si la fréquence d'exécution de la tâche d'acquisition supplémentaire est inférieure à la fréquence prédéfinie, alors la régénération de la tâche d'acquisition supplémentaire dont l'exécution a échoué, et l'ajout de la tâche d'acquisition supplémentaire à la file d'attente de tâches d'acquisition de données de performance ; sinon, la détermination que l'exécution de la tâche d'acquisition supplémentaire générée automatiquement échoue.

4. Procédé d'acquisition de données de performance selon la revendication 3, **caractérisé en ce que** la génération de la tâche d'acquisition principale des données de performance et l'ajout de la tâche d'acquisition principale à la file d'attente de tâches d'acquisition de données de performance comprennent :
la génération de la tâche d'acquisition principale de données de performance à un intervalle de temps et l'ajout de la tâche d'acquisition principale générée à la file d'attente de tâches d'acquisition de données de performance, une valeur de l'intervalle de temps auquel la tâche d'acquisition principale de données de performance est générée étant différente d'une valeur d'un intervalle de temps auquel une tâche d'acquisition supplémentaire est générée.

5. Procédé d'acquisition de données de performance selon la revendication 4, **caractérisé en ce qu'**après qu'il a été déterminé que l'exécution de la tâche d'acquisition supplémentaire générée automatiquement avait échoué, le procédé comprend en outre :
la réception d'une instruction d'acquisition supplémentaire manuelle saisie par un utilisateur ;
la génération, conformément à l'instruction d'acquisition supplémentaire manuelle, d'une tâche d'acquisition supplémentaire manuelle et l'ajout de la tâche d'acquisition supplémentaire manuelle à la file d'attente de tâches d'acquisition de données de performance ;
l'acquisition de la tâche d'acquisition supplémentaire manuelle à partir de la file d'attente de tâches d'acquisition de données de performance et l'exécution de la tâche d'acquisition supplémentaire manuelle.

6. Procédé d'acquisition de données de performance selon la revendication 5, **caractérisé en ce que** :
l'établissement de la file d'attente de tâches d'acquisition de données de performance comprend : l'établissement de la file d'attente de tâches d'acquisition de données de performance et le réglage de priorités de tâches d'acquisition dans la file d'attente de tâches d'acquisition, les priorités des tâches d'acquisition étant, par ordre décroissant : la tâche d'acquisition principale, la tâche d'acquisition supplémentaire générée automatiquement et la tâche d'acquisition supplémentaire manuelle ; ou
l'établissement de la file d'attente de tâches d'acquisition de données de performance comprend : l'établissement de la file d'attente de tâches d'acquisition de données de performance, et l'agencement de tâches d'acquisition dans la file d'attente de tâches d'acquisition de données de performance conformément à une séquence chronologique de génération des tâches d'acquisition.

7. Procédé d'acquisition de données de performance selon la revendication 1, **caractérisé en ce qu'**après que la tâche d'acquisition principale a échoué, la génération de la tâche d'acquisition supplémentaire correspondant à la tâche d'acquisition principale et l'ajout de la tâche d'acquisition supplémentaire à la file d'attente de tâches d'acquisition de données de performance comprennent :
après réception d'une notification d'échec de la tâche d'acquisition principale, la réception d'une instruction d'acquisition supplémentaire manuelle saisie par un utilisateur ;
la génération d'une tâche d'acquisition supplémentaire manuelle conformément à l'instruction d'acquisition supplémentaire manuelle et l'ajout de la tâche d'acquisition supplémentaire manuelle à la file d'attente de tâches d'acquisition de données de performance.

8. Système de gestion de réseau de télécommunications destiné à acquérir des données de performance d'un réseau de télécommunications, **caractérisé en ce qu'**il comprend :
un composant de commande principale d'acquisition de données de performance, un composant de génération de tâche d'acquisition principale, un composant de génération de tâche d'acquisition supplémentaire et un composant d'exécution de tâche d'acquisition, dans lequel :
le composant de commande principale d'acquisition de données de performance est configuré pour établir une file d'attente de tâches d'acquisition de données de performance ;
le composant de génération de tâche d'acquisition principale est configuré pour générer une tâche d'acquisition principale de données de performance et ajouter la tâche d'acquisition principale à la file d'attente de tâches d'acquisition de données de performance ;
le composant d'exécution de tâche d'acquisition est configuré pour acquérir une tâche d'acquisition à partir de la file d'attente de tâches d'acquisition de données de performance et exécuter la tâche d'acquisition ;
le composant de génération de tâche d'acquisition supplémentaire est configuré pour générer, après que l'exécution de la tâche d'acquisition principale a échoué, une tâche d'acquisition supplémentaire correspondant à la tâche d'acquisition principale et ajouter la tâche d'acquisition supplémentaire à la file d'attente de tâches d'acquisition de données de performance.

9. Système de gestion de réseau de télécommunications destiné à acquérir des données de performance selon la revendication 8, **caractérisé en ce que** le composant de génération de tâche d'acquisition supplémentaire comprend un sous-composant de génération de tâche d'acquisition supplémentaire automatique ; dans lequel :
le sous-composant de génération de tâche d'acquisition supplémentaire automatique est configuré pour générer, après réception d'une notification d'échec de la tâche d'acquisition principale, la tâche d'acquisition supplémentaire automatiquement après un intervalle de temps, et ajouter la tâche d'acquisition supplémentaire à la file d'attente de tâches d'acquisition de données de performance ; ou
le sous-composant de génération de tâche d'acquisition supplémentaire automatique est configuré pour générer, après réception d'une notification d'échec de la tâche d'acquisition principale, la tâche d'acquisition supplémentaire automatiquement et immédiatement et ajouter la tâche d'acquisition supplémentaire à la file d'attente de tâches d'acquisition de données de performance.

10. Système de gestion de réseau de télécommunications destiné à acquérir des données de performance selon la revendication 9, **caractérisé en ce que** le dispositif servant à acquérir les données de performance comprend en outre : un composant de détermination de fréquence d'exécution ; le composant de détermination de fréquence d'exécution est configuré pour déterminer, lorsque l'exécution de la tâche d'acquisition supplémentaire échoue, si une fréquence d'exécution de la tâche d'acquisition supplémentaire est inférieure à une fréquence prédéfinie ; si la fréquence d'exécution de la tâche d'acquisition supplémentaire est inférieure à la fréquence prédéfinie, alors notifier au sous-composant de génération de tâche d'acquisition supplémentaire automatique de régénérer la tâche d'acquisition supplémentaire dont l'exécution a échoué et ajouter la tâche d'acquisition supplémentaire régénérée à la file d'attente de tâches d'acquisition de données de performance ; sinon, déterminer que l'exécution de la tâche d'acquisition supplémentaire générée automatiquement a échoué.

11. Système de gestion de réseau de télécommunications destiné à acquérir des données selon la revendication 10, **caractérisé en ce que** le composant de génération de tâche d'acquisition principale est configuré pour générer une tâche d'acquisition principale de données de performance à un intervalle de temps et ajouter la tâche d'acquisition principale à la file d'attente de tâches d'acquisition de données de performance, une valeur de l'intervalle de temps auquel une tâche d'acquisition principale de données de performance est générée étant différente d'une valeur d'un intervalle de temps auquel une tâche d'acquisition supplémentaire est générée.

12. Système de gestion de réseau de télécommunications destiné à acquérir des données de performance selon la revendication 11, **caractérisé en ce que** le dispositif servant à acquérir les données de performance comprend en outre : un composant de réception d'instruction et un composant de génération de tâche d'acquisition supplémentaire manuelle ;
le composant de réception d'instruction est configuré pour recevoir, après qu'il a été déterminé que l'exécution de la tâche d'acquisition supplémentaire générée automatiquement avait échoué, une instruction d'acquisition supplémentaire manuelle ;
le composant de génération de tâche d'acquisition supplémentaire manuelle est configuré pour générer, conformément à l'instruction d'acquisition supplémentaire manuelle, une tâche d'acquisition supplémentaire manuelle et ajouter la tâche d'acquisition supplémentaire manuelle à la file d'attente de tâches d'acquisition de données de performance ;
le composant d'exécution de tâche d'acquisition est en outre configuré pour acquérir la tâche d'acquisition supplémentaire manuelle à partir de la file d'attente de tâches d'acquisition de données de performance et exécuter la tâche d'acquisition supplémentaire manuelle.

13. Système de gestion de réseau de communication destiné à acquérir des données de performance selon la revendication 8, **caractérisé en ce que** le composant de génération de tâche d'acquisition supplémentaire comprend : un sous-composant de réception d'instruction et un sous-composant de génération de tâche d'acquisition supplémentaire manuelle ;
le sous-composant de réception d'instruction est configuré pour recevoir, après réception d'une notification d'échec de la tâche d'acquisition principale, une instruction d'acquisition supplémentaire manuelle ;
le sous-composant de génération de tâche d'acquisition supplémentaire manuelle est configuré pour générer, conformément à l'instruction d'acquisition supplémentaire manuelle, une tâche d'acquisition supplémentaire manuelle et ajouter la tâche d'acquisition supplémentaire manuelle à la file d'attente de tâches d'acquisition de données de performance.
